# EUROPEAN PATENT APPLICATION

(11) **EP 4 365 225 A1**
(43) Date of publication of application: **08.05.2024**
(21) Application number: 22205434.8
(22) Date of filing: 04.11.2022
(51) Int. Cl.: C08K 5/32, C08K 5/5373

(54) **FLAME-RETARDANT COMPOSITION, POLYMER COMPOSITION COMPRISING SAME AND USE THEREOF**

(71) Applicant: Clariant International Ltd, 4132 Muttenz (CH)
(72) Inventor: STEFFANUT, Pascal, 68128 Village-Neuf (FR); FERNANDEZ PEREZ, Javier, 68120 Richwiller (CH); HUFENUS, Rudolf, 9014 St Gallen (CH); GAAN, Sabyasachi, 9200 Gossau (CH); WAIBEL, Annett, 9050 Appenzell Meistersrüte (CH)
(74) Representative: Clariant Produkte (Deutschland) GmbH

(57) **Abstract**

Disclosed are flame-retardant compositions comprising
a) a compound comprising a N-oxyamine group, and
b) a compound of formulae (II), (III) or (IV) 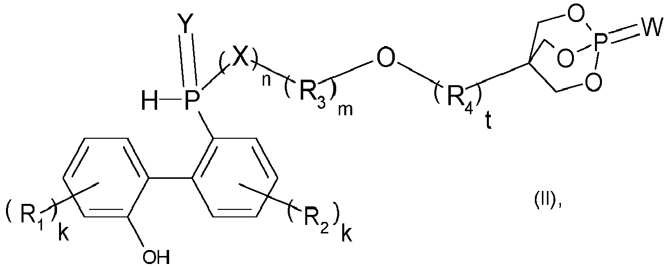 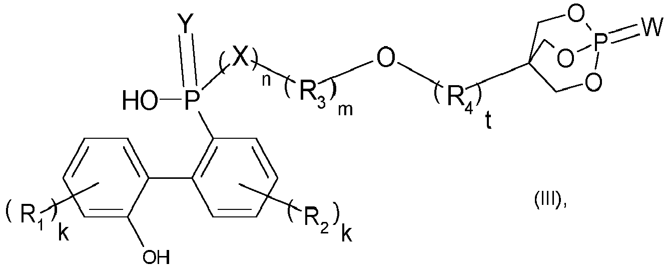 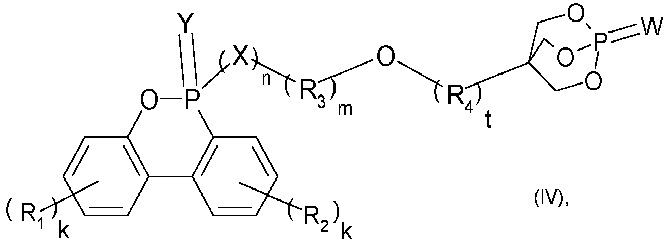 wherein
R₁ and R₂
independently from one another are hydrogen, C₁-C₆-alkyl, -P(O)(OR₅)₂, -P(O)OR₅R₆, -P(O)(R₅)₂, where R₅ and R₆ independently of one another are C₁-C₄-alkyl, C₆-C₁₂-aryl, C₇-C₁₅-aralkyl or C₇-C₁₅-alkaryl, or R₁ and R₂ taken together form an unsaturated cyclic ring, which is optionally substituted by an alkyl group;
k
is an integer from 1 to 2,
Y
is O or S,
X
is C₁-C₄-alkylene, C₆-C₁₂-arylene, C₇-C₁₅-aralkylene or C₇-C₁₅-alkarylene and n is 0, 1 or 2, or
X
is -O- or -NR₇-, and n is 1,
R₇
is hydrogen or C₁-C₄-alkyl,
R₃
is C₁-C₄-alkylene, C₆-C₁₂-arylene, C7-C15-aralkylene or C₇-C₁₅-alkarylene,
m
is 0, 1 or 2, with the proviso that when X is -O- or -NR₇- m is 1 or 2,
R₄
is C₁-C₄-alkylene,
t
is an integer from 1 to 2, and
W
is oxygen or sulphur.

The compositions can be used as flame-retardants in polymer compositions which exhibit improved flame-retardancy.

## Description

The present invention relates to a novel flame-retardant composition which can be used to make polymer compositions with improved flame-retardancy. The invention also relates to to improved polymer compositions that may be shaped, in particular, into thin-gauge articles, such as polyolefin sheets and films and polyolefin fibers, with improved flame-retardancy.

Polymers, such as polyolefins are increasingly being employed in applications where flame retardancy is required. Flame retardancy is typically achieved by addition of bromine or phosphorus compounds. However, bromine compounds markedly reduce the photostability of the olefins and can therefore only be used to a very limited extent in exterior applications.

Phosphorus-containing flame retardants need to be employed in large amounts and are also often ineffective in thin-gauge applications, such as fibers and sheets and films.

US-A-6,599,963 describes polymeric substrates comprising a flame retardant system comprising a sterically hindered amine and a brominated flame retardant.

WO-A-1999/000450 describes the use of a sterically hindered amine compound as a flame retardant for polymers.

WO-A-2010/026230 describes mixtures of cyclic phosphonates, one or more 1,3,5-triazine compounds and sterically hindered amino ethers. Said document describes polyethylene sheets and films meeting the fire classification DIN 4102 B2. The disadvantage is that transparent sheets and films cannot be prepared.

WO-A-2015/010775 discloses the combination of amino ethers from sterically hindered amines together with a fine grained phosphinate salt. By the combination the flame retardancy can be much improved, but no transparent flame retarded films could be achieved.

WO-A-2011/117266 describes polymeric substances comprising a salt of a phosphinic acid and a tetraalkylpiperidine or a tetraalkylpiperazine derivative. Polypropylene achieves fire classification V-2 with the addition of 8% flame retardant. The mixture is unsuitable for sheets and films and fibers due to the high filler content and the particle size of the phosphinic acid salt employed.

Owing to their chemical reactivity, which is required for flame retardancy at high temperatures, flame-retardants may impair the processing stability of plastic materials. Increased polymer degradation, crosslinking reactions, outgassing or discoloration may occur, for example. These effects occur in attenuated form, if at all, for plastic materials processing in the absence of said flame retardant.

The difficulty with incorporation of the sterically hindered amines described in WO-A-1999/000450 into sheets and films or fibers is that odor and/or discoloration problems are encountered during incorporation. Furthermore, compounds of low molecular weight may migrate out of the plastic material.

Various phosphorus-containing compounds have already been investigated for their suitability as flame retardant additives. Polyphosphonates or phosphonate oligomers have shown flame retardant activity in a number of plastics as well. However, these polyphosphonates require high loadings in the thermoplastic resin, even with the addition of typical melamine based synergists (US-A-2009/0043013).

9,10-Dihydro-9-oxa-10-phosphaphenanthrene-10-oxide or (6H-dibenz [c, e] [1, 2] oxa-phosphorine-6-oxide) (hereinafter also called "DOPO") is an ester of phosphinic acid, wherein a phosphorous atom and an oxygen atom are incorporated into the base structure of a phenanthrene. DOPO has flame retardant properties and is a base compound for a variety of different halogen-free and very effective flame retardants for polymers.

DOPO may be synthesized by reaction of 2-phenylphenol with phosphorus trichloride in the presence of zinc chloride. The reaction product 6-chlorine (6H)-dibenz[c,e][1,2] oxaphosphorine (DOP-CI) is produced in high yields at high temperatures under hydrochlorine breakdown. When heating The DOP-CI at high temperatures in the presence of water DOPO is quantitatively produced in high purity.

DOPO is a white crystalline solid which is present in the form of two tautomers, 6*H*-dibenzo[*c*,*e*][1,2]oxaphosphorine-6-one (tautomer I) and 6-hydroxy-(6*H*)-dibenzo-[c,e][1,2]oxaphosphorin (tautomer II). This latter compound hydrolyses in the presence of water to 2'-hydroxydiphenyl-2-phosphinic acid.

In recent years, a number of DOPO derivatives have been synthesized, particularly for use in epoxy resins for electrical and electronic applications that are more hydrolysis stable and have significantly higher melting points.

Summarizing, DOPO and and its derivatives are well known flame retardants in polymers, e.g. in polyesters.

From DE 10330774 and EP 2,284,208 it is known that DOPO can be reacted with an unsaturated dicarboxylic acid and subsequently copolymerized with other P-containing derivatives, suitable to build ester bonds, to obtain flame retardant polyesters with varying P-content. These DOPO-based polymers can serve, for example as flame retardant additive for polyethylene terephthalate (PET) in fiber applications or as stand-alone flame retardant polyesters in engineering plastics.

Furthermore, WO 2015/140105 A1 discloses hybrid materials comprising units of DOPO and units of pentaerythritol phosphate alcohol (hereinafter also called "PEPA") which are covalently linked to each other. These compounds, which are based on a combination of DOPO- and PEPA-type moieties and thus could be envisioned as "hybrid flame retardants", exhibit a combination of several characteristics that are highly desirable in a flame retardant compound, particularly in a flame retardant additive for thermoplastic polyesters. Such advantageous properties comprise, but are not limited to, a high thermal stability (enabling melt blending), a high melting temperature of at least about 150°( and closely lying below the melt processing temperature of most polyesters, thus allowing for a more even dispersion of the additive in the polyester polymeric matrix.

Surprisingly, it has now been found that a combination of selected amino ethers with with DOPO-PEPA derivatives show improved flame retardant action in polymers, preferably in polyolefins. Various flame retardant classifications can be achieved at low loadings, and the negative impact on physical properties is lessened.

It is therefore an object of the present invention, to provide new combinations of flame-retardant materials and of polymers, preferably of polyolefins, comprising the same that do not have the existing drawbacks of the current amino-ether based flame-retardants, and that are superior in performance to flame-retardant combinations known to date.

It was surprisingly found that combination of selected amino-ether hindered amine compounds, like the Hostavin NOW, and a DOPO-PEPA hybride material can be applied as a very efficient flame retardant for polymers. Instead of DOPO also 10-hydroxy-group containing DOPO (also referred as DOPO-OH) or their thio analogues can be used as components in the hybride material with PEPA-units.

DOPO or DOPO-OH or their thio analogues correspond to the formula (I) shown below 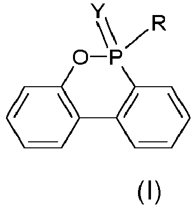 wherein
- Y: represents O or S, and
- R: represents hydrogen or OH.

The present invention relates to a flame-retardant composition comprising:
a) a compound comprising a N-oxyamine group, and
b) a compound of formulae (II), (III) or (IV) 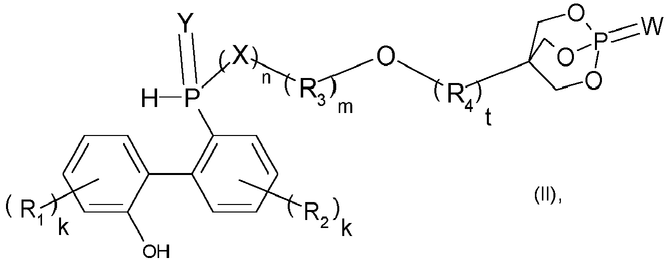 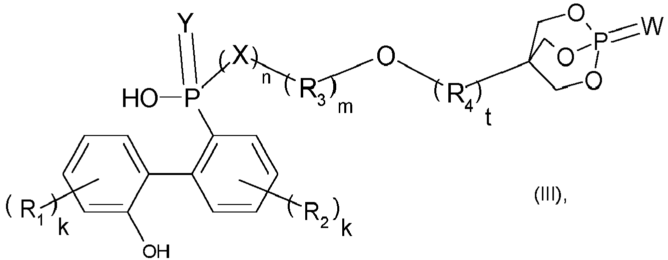 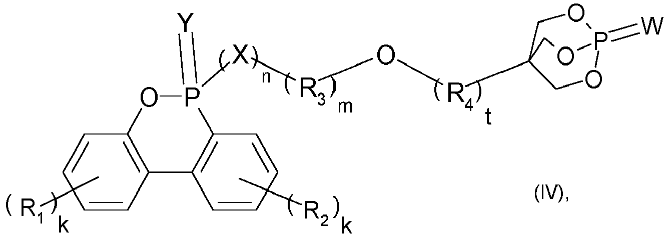
wherein
- R₁ and R₂: independently from one another are hydrogen, C₁-C₆-alkyl, -P(O)(OR₅)₂, -P(O)OR₅R₆, -P(O)(R₅)₂, where R₅ and R₆ independently of one another are C₁-C₄-alkyl, C₆-C₁₂-aryl, C₇-C₁₅-aralkyl or C₇-C₁₅-alkaryl, or R₁ and R₂ taken together form an unsaturated cyclic ring, which is optionally substituted by an alkyl group;
- k: is an integer from 1 to 2,
- Y: is O or S,
- X: is C₁-C₄-alkylene, C₆-C₁₂-arylene, C₇-C₁₅-aralkylene or C₇-C₁₅-alkarylene and n is 0, 1 or 2, or
- X: is -O- or -NR₇-, and n is 1,
- R₇: is hydrogen or C₁-C₄-alkyl,
- R₃: is C₁-C₄-alkylene, C₆-C₁₂-arylene, C7-C15-aralkylene or C₇-C₁₅-alkarylene,
- m: is 0, 1 or 2, with the proviso that when X is -O- or -NR₇- m is 1 or 2,
- R₄: is C₁-C₄-alkylene,
- t: is an integer from 1 to 2, and
- W: is oxygen or sulphur.

Component a) is a radical forming agent. Preferably component a) is a N-oxyamine-containing compound comprising the structural unit of formula (V) 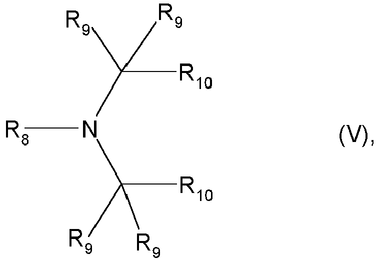 wherein
- R₈: is alkoxy, aryloxy, cycloalkoxy, aralkoxy or acyloxy,
- R₉: is optionally substituted alkyl, cycloalkyl, aryl, heteroaryl or acyl, preferably a C₁-C₄-alkyl-group, most preferred methyl or ethyl,
- R₁₀: is hydrogen or optionally substituted alkyl, cycloalkyl, aryl, heteroaryl or acyl, or two R₁₀ groups together with the atoms to which they are attached form a ring structure, preferably with five or four ring carbon atoms and with one ring nitrogen atom, which is optionally substituted with ester-, ether-, amine-, amide-, carboxy- or urethane-groups.

Preferred components a) are compounds comprising a N-alkoxyamine group.

More preferred components a) are 1-cyclohexyloxy-2,2,6,6-tetramethyl-4-octadecylamino-piperidine, bis(1-octyloxy-2,2,6,6-tetramethylpiperidine-4-yl)-sebacate, 2,4-bis[(1-cyclohexyloxy-2,2,6,6-tetramethylpiperidine-4-yl)-butyl-amino]-6-(2-hydroxyethyl-amino-S-triazine, bis(1-cyclohexyloxy-2,2,6,6-tetramethyl-piperidine-4-yl)-adipate, 2,4-bis[(1-cyclohexyloxy-2,2,6,6-tetramethylpiperidine-4-yl)-butylamino]-6-chloro-S-triazine, 1-(2-hydroxy-2-methylpropoxy)-4-hydroxy-2,2,6,6-tetramethylpiperidine, 1-(2-hydroxy-2-methylpropoxy)-4-oxo-2,2,6,6-tetramethyl-piperidine, 1-(2-hydroxy-2-methylpropoxy)-4-octadecanoyloxy-2,2,6,6-tetramethyl-piperidine, bis(1-(2-hydroxy-2-methylpropoxy)-2,2,6,6-tetramethylpiperidine-4-yl)-sebacate, bis(1-(2-hydroxy-2-methylpropoxy)-2,2,6,6-tetramethylpiperidine-4-yl)- adipate, 2,4-bis{N-[1-(2-hydroxy-2-methylpropoxy)-2,2,6,6-tetramethylpiperidine-4-yl]-N-butylamino}-6-(2-hydroxy-ethylamino)-S-triazine), 4-piperidinol-2,2,6,6-tetramethyl-1-(undecyloxy)-4,4'-carbonate, the reaction product of 2,4-bis[(1-cyclohexyloxy-2,2,6,6-tetramethyl-piperidine-4-yl)-butylamino]-6-chloro-S-triazine with N,N'-bis-(3-aminopropyl-ethylenediamine); the oligomer which is the condensation product of 4,4'-hexamethylene-bis-(amino-2,2,6,6-tetramethylpiperidine) and 2,4-dichloro-6-[(1-cyclohexyloxy-2,2,6,6-tetramethyl-4-yl)-butylamino]-S-triazine end-chapped with 2-chloro-4,6-bis(dibutylamino)-S-triazine, aliphatic hydroxylamines, such as disterarylhydroxylamine; as well as compounds of the following formulae, in which n is 1-15 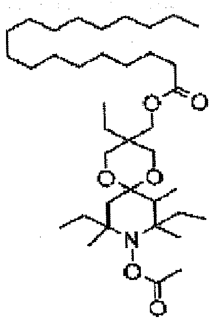 or

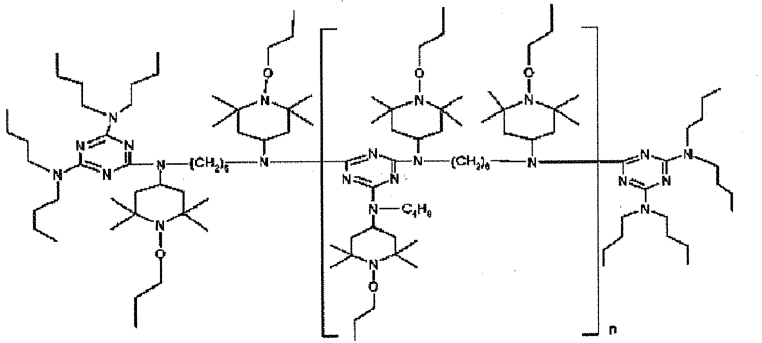

The above-mentioned compounds are partially commercial products and are available under the commercial names: FLAMESTAB NOR 116 (RTM), TINUVIN NOR 371 (RTM), IRGATEC CR76 (RTM) of BASF SE, Hostavin NOW (RTM) of Clariant or ADK Stab LA 81 (RTM) of Adeka.

Very preferred component a) is a reaction product of a fatty acid ester of a 4-hydroxy-2,2,6,6-tetramethylpiperidine, for example of a 2,2,6,6-tetramethylpiperidin-4-yl-hexadecanoate and/or a 2,2,6,6-tetramethylpiperidin-4-yl-octadecanoate, with an oxidized polyethylene. This reaction product results in a compound of the formula 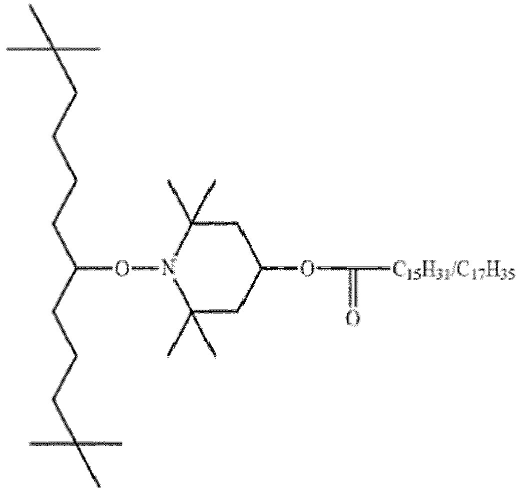 wherein
C₁₅H_{31/}C₁₇H₃₅ are the main components and the alkyl radical at the N-O- bridge has an average molecular weight of about 2000.

Preferably the thermal stability of the compounds of formulae (II), (III) and (IV), component b), is from 270°C to 335°C, more preferably from 280°C to 330°C, most preferably from 290°C to 325°C, and the melting temperature is preferably from 150°C to 260°C, more preferably from 160°C to 240°C, and most preferably from 170°C to 230°C. When exposed to a flame or fire the compounds of the formulae (II), (III) and (IV) exhibit a hybrid flame retardant activity in the gas-phase and in the condensed-phase simultaneously.

Unless otherwise indicated, the term "thermal stability" as used herein in relation to a compound is characterized by indicating a "decomposition temperature", which shall be understood as a threshold temperature at which substantial (5 % weight loss under inert atmosphere) thermal decomposition of the compound sets in.

Unless otherwise indicated, the term "alkyl" as used herein includes saturated monovalent hydrocarbon radicals with straight or branched moieties such as, but not limited to: methyl, ethyl, propyl, isopropyl, butyl or isobutyl.

Unless otherwise indicated, the term "alkylene" as used herein includes saturated divalent hydrocarbon radicals with straight or branched moieties such as, but not limited to: methylene, ethylene, propylene, isopropylene, butylene or isobutylene.

Unless otherwise indicated, the term "aryl" as used herein includes an aromatic radical derived from an aromatic hydrocarbon by removal of one hydrogen, such as, but not limited to, phenyl or naphthyl.

Unless otherwise indicated, the term "arylene" as used herein includes an aromatic bivalent radical derived from an aromatic hydrocarbon by removal of two hydrogens such as, but not limited to phenylene.

Unless otherwise indicated, the term "aralkyl" as used herein signifies an "arylalkyl-" group such as, but not limited to: benzyl (C₆H₅-CH₂-) or methylbenzyl (CH₃-C₆H₄-CH₂-).

Unless otherwise indicated, the term "alkaryl" as used herein signifies an "alkylaryl-" group such as, but not limited to: methylphenyl (CH₃-C₆H₄-), dimethylphenyl ((CH₃)₂-C₆H₃-) or isopropylphenyl ((CH₃)₂C-C₆H₄-).

Preferred compounds of formulae (II), (III) or (IV), component b), are those, wherein n and m are 0, Y is oxygen or sulphur, R₄ is methylene or ethylene, t is 1 and W is oxygen.

Preferred compounds of formulae (II), (III) or (IV), component b), are those, wherein both R₁ and R₂ independently of one another are hydrogen or C₁-C₆-alkyl.

Preferred compounds of formulae (II), (III) or (IV), component b), are those, wherein X is methylene, n is 1, m is 0, Y is oxygen, R₄ is methylene or ethylene, t is 1, and W is oxygen.

Preferred compounds of formulae (II), (III) or (IV), component b), are those, wherein Y is oxygen or sulphur, X is -O- oxygen or -NH-, n is 1, R₃ is methylene or ethylene, m is 2, R₄ is methylene, t is 1 and W is oxygen.

More preferred components b) are compounds of formula (IV).

Most preferred components b) are compounds of formulae (VI) (DOPO-PEPA) or (VII) (DOPS-PEPA)

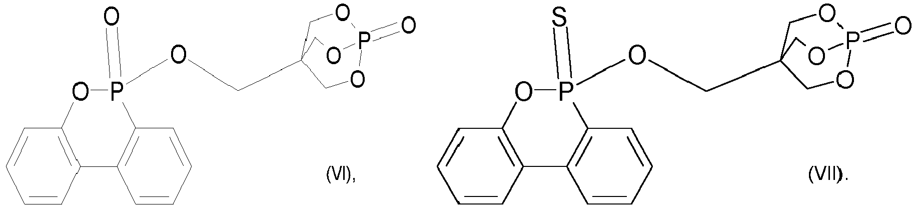

The compounds of formulae (II), (III) and (IV) are known compounds and may be prepared by known manufacturing methods..

Component a) is typically present in 50 - 99.5 % by weight and component b) is typically present in 0.5 - 50 % by weight in the flame retardant mixture of this invention. Preferably, component a) is contained in 60 - 70 % by weight and component b) is contained in 30 - 40 % by weight in the flame-retardant mixture. These percentages refer to the total amount of flame-retardant mixture.

Surprisingly, a flame-retardant composition comprising components a) and b) shows an excellent flame-retardancy combined with very good transparency, UV resistance, flowability, extrudability and moldability in different plastic articles, preferably in polymers derived from ethylenically unsaturated monomers.

The present invention thus relates to a flame-retardant polymer composition comprising:
a) a N-oxyamine group containing compound as defined above,
b) a compound of formulae (II), (III) or (IV) as defined above, and
c) a polymer

The amount of flame-retardant a) in the flame-retardant polymer composition of the invention may also vary in a broad range. Typically, the amount of component a) is 0.2 to 10 % by weight, preferably 0.5 to 5 % by weight and most preferred 0.2 to 2 % by weight, referring to the total amount of the polymer composition.

The amount of flame-retardant b) in the flame-retardant polymer composition of the invention may also vary in a broad range. Typically, the amount of component b) is 0.1 to 20 by weight, preferably 0.1 to 5 % by weight, more preferred 0.2 to 2 % by weight and most preferred 0.5 to 2 % by weight, referring to the total amount of the polymer composition.

The amount of polymer c) in the flame-retardant polymer composition of the invention may vary in a broad range. Typically, the amount of component c) is 70 to 99.7 % by weight, preferably 80 to 99.7 % by weight, more preferred 90 to 99.3 % by weight and most preferred 94 to 99.2 % by weight, referring to the total amount of the polymer composition.

Component c) of the flame-retardant polymer compositions of the invention can be any natural polymer including modifications by chemical treatment or any synthetic polymer. Polymer blends may also be used. Suitable polymers a) include thermoplastic polymers, thermoplastic elastomeric polymers, elastomers or duroplastic polymers.

Preferably thermoplastic polymers are used as component c). Preferred thermoplastic polymers are selected from the group consisting of polyamides, polycarbonates, polyesters, polyolefins, polystyrenes, polyvinyl chlorides, polyvinyl esters, polyvinyl alcohols, polybutadiene-copolymers, such as ABS, and polyurethanes.

Moreover, duroplastic polymers may be used. These are preferably selected from the group consisting of epoxy resins, phenolic resins and melamine resins.

Additionally, also mixtures of two or more polymers, in particular thermoplastics and/or thermosets may be used.

Preferably component c) in the polymer compositions of the present invention is a polymer obtained from polymerization of one or more ethylenically unsaturated monomer(s).

While the polymer c) can be any of a wide variety of polymeric types including polyolefins, polystyrenics and PVC, but preferably the polymer c) is selected from the group of polyolefins, thermoplastic elastomeric polyolefins (TPO), styrenic polymers and copolymers, polybutadiene-copolymers, such as ABS, and polymers which contain hetero atoms, double bonds or aromatic rings, for example polyimides or polyamides, such as aromatic polyamides.

Examples of these preferred polymers c) are:
1. Polymers of monoolefins and diolefins, for example polypropylene, polyisobutylene, polybut-l-ene, poly-4-methylpent-l-ene, polyisoprene or polybuta-diene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), branched low density polyethylene (BLDPE). Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature), or
   b) catalytic polymerisation using a catalyst that normally contains one or more, than one metal of groups IYb, Vb, Vlb or VIII of the Periodic Table. These metals usually have one or more than one ligand, typically oxides, halides, alcoholates, esters, ethers, amines, alkyls, alkenyls and/or aryls that may be either 1t- or α-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups la, IIa and/or Ilia of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but- 1-ene copolymers, propylene/isobutylene copolymers, ethylene/but-1-ene copolymers, ethylene/hexene copolymers, ethylene/-methylpentene copolymers, ethylene/heptane copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene- norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Polystyrene, poly(p-methylstyrene), poly(α-methylstyrene).
5. Copolymers of styrene or α-methyl styrene with dienes or acrylic derivatives, for example styrenelbutadiene, styrene/acrylonitrile, styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrenelbutadiene/styrene, styrene/isoprene/styrene, styrene/ethylene/butylene/styrene or styrene/ethylene/propylene/styrene.
6. Graft copolymers of styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/- butadiene copolymers, as well as mixtures thereof with the copolymers listed under 6), for example the copolymer mixtures known as ABS (acrylonitrile/-butadiene/styrene), MBS, ASA or AES polymers.
7. Halogen-containing polymers, such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride (PVC), polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.

Especially preferred are polypropylene, polyethylene, thermoplastic elastomeric olefin (TPO), ABS and high impact polystyrene; most preferred are polypropylene, polyethylene and thermoplastic elastomeric olefin (TPO).

The flame-retardant polymer compositions of the present invention may contain further additives as component d).

The amount of component d) may vary in a broad range. Typical amounts of component e) are between 0 and 60 % by weight, preferably between 1 and 50 % by weight and more preferred between 5 and 30 % by weight, referring to the total amount of the flame-retardant polymer composition.

Examples of additives d) are antioxidants, blowing agents, further flame retardants, light stabilizers, heat stabilizers, impact modifiers, processing aids, glidants, processing aids, nucleating agents and clarifiers, antistatic agents, lubricants, such as calcium stearate and zinc stearate, viscosity and impact modifiers, compatibilizers and dispersing agents, dyes or pigments, antidripping agents, additives for laser marking, hydrolysis stabilizers, chain extenders, softeners and/or plasticizers, fillers and/or reinforcing agents.

The flame-retardant polymer composition of the present invention preferably contains waxes, more preferred polyethylene waxes and still more preferred functionalized polyethylene waxes as additives d). An example of a functionalized polyethylene wax is Licocene PE MA 4351 available from Clariant which is a highly grafted maleic acid metallocene polyethylene wax and which is preferably used in combination with polyethylene as a compatibilizer.

Preferred flame-retardant polymer compositions of the present invention comprise polyethylene and a functionalized polyethylene wax.

The flame-retardant polymer composition of the present invention preferably contains additional fillers. These are are preferably selected from the group consisting of metal hydroxides and/or metal oxides, preferably alkaline earth metal, e.g. magnesium hydroxide, aluminum hydroxide, silicates, preferably phyllosilicates, such as bentonite, kaolinite, muscovite, pyrophyllite, marcasite and talc or other minerals, such as wollastonite, silica such as quartz, mica, feldspar and titanium dioxide, alkaline earth metal silicates and alkali metal silicates, carbonates, preferably calcium carbonate and talc, clay, mica, silica, calcium sulfate, barium sulfate, pyrite, glass beads, glass particles, wood flour, cellulose powder, carbon black, graphite and chalk.

The flame-retardant polymer composition of the present invention preferably contains reinforcing agents, more preferred reinforcing fibers. These are are preferably selected from the group consisting of glass fibers, carbon fibers, aramid fibers, potassium titanate whiskers, glass fibers being preferred. The incorporation of the reinforcing agents in the molding compositions can be done either in the form of endless strands (rovings) or in cut form (short glass fibers). To improve the compatibility with the polymer matrix, the reinforcing fibers used can be equipped with a size and an adhesion promoter. The diameter of commonly used glass fibers is typically in the range of 6 to 20 microns.

These additives d) can impart other desired properties to the polymer composition of the invention. In particular, the mechanical stability can be increased by reinforcement with fibers, preferably with glass fibers.

The flame-retardant polymer compositions of the invention are preferably prepared by providing the components a), b), c) and optionally d), e.g. by mixing or by incorporation into a masterbatch, and by incorporating the components a), b) and optionally d) into the polymer or polymer mixture.

The components a), b) and optionally d) can be incorporated into the polymer c) by premixing all components as powder and/or granules in a mixer and then homogenizing them in the polymer melt in a compounding unit (e.g. a twin-screw extruder). The melt is usually withdrawn as a strand, cooled and granulated. The components a), b) and optionally d) can also be introduced separately via a metering system directly into the compounding unit. It is also possible to admix the components a), b) and optionally d) to a finished polymer granulate or powder and to process the mixture directly to form parts, e.g. on an injection molding machine.

The process for the production of flame-retardant polymer compositions is characterized by incorporating and homogenizing the components a), b) and optionally d), into polymer pellets (optionally together with other additives), in a compounding assembly at elevated temperatures. The resulting homogenized polymer melt is then formed into a strand, cooled and portioned. The resulting granules are dried, e.g. at 90 °C in a convection oven.

It is likewise possible to admix the components a) and b) and optional component d) with prepared polymer pellets/powder (component c) and to process the mixture directly, for example on a film blowing line or a fiber spinning line.

Preferably, the compounding equipment is selected from the group of single-screw extruders, multizone screws, or twin-screw extruders.

The flame-retardant polymer compositions according to the invention are suitable for the production of moldings, e.g. films, sheets, threads and fibers, for example by injection molding, extrusion, blow molding or press molding.

The invention also relates to a molding prepared from a composition containing components a), b), c) and optionally d).

In some embodiments, the polymer composition is processed into a transparent sheeting, for example of 50-500 µm in thickness.

Preferred molded articles are films, threads and fibers comprising polyolefins, such as polyethylene, polypropylene, ethylene-vinyl acetate as component c).

The polymer compositions according to the invention are particularly suitable for the manufacture of blown films. Blown films feature an extraordinarily high film cohesion and particularly high perforation and tear propagation resistance. Blown films may be sheets and films composed of only one layer (so-called monolayer blown film) or sheets and films manufactured from a plurality of layers (so-called coextruded blown film). A coextruded blown film provides for combining the positive properties of different materials in one sheeting.

The invention furthermore relates to the use of the compositions comprising components a) and b) as a flame retardant.

Finally, the invention relates to the use of the polymer compositions comprising components a), b), c) and optionally d) for the manufacture of polymer molded materials, preferred polyolefin molded materials, and most preferred polyolefin films or polyolefin fibers.

### Examples

The following examples serve to illustrate the invention.

### Employed materials for inventive examples

### Component a)

Hostavin^{®} NOW: 2,2,6,6-tetramethylpiperidin-4-yl-hexadecanoate and 2,2,6,6-tetramethylpiperidin-4-yl-octadecanoate, reaction product with an oxidized polyethylene wax, Clariant, Frankfurt, DE, referred to hereinbelow as HALS-NO wax.

Flamestab^{®} NOR 116: 1,3-propanediamine, N,N"-1,2-ethandiylbis-, reaction products with cyclohexane and peroxidized N-butyl-2,2,6,6-tetramethyl-4-piperidinamine-2,4,6-trichloro-1,3,5-triazine reaction product, CAS No. 191680-81-6, from BASF, Ludwigshafen, DE

### Component b)

DOPO-PEPA with phosphorus content of about 15.7 wt.-%; transparent, high flowing polymer with a glass transition temperature of about 105°C, supplier: FRX Polymers, Chelmsford, MA (USA).

### Component c)

Sabic LDPE 2102 Z 500, low-density polyethylene, MFR 1.7-2.2 g/10 min, from Sabic, Geleen, the Netherlands, referred to hereinbelow as LDPE

### Employed materials for comparative examples

Exolit^{®} OP 935, aluminum salt of diethylphosphinic acid, referred to herein below as Depal d₅₀ 2-3 µm, particle size d₉₅<10 µm, particle size d₅₀ 2-3 µm, Clariant, Frankfurt, DE.

Aflammit^{®} PCO 800: melamine salt of a phosphonic acid, Thor, Speyer, DE.

Others: Nofia^{®} HM 1100, Aflammit^{®} PCO 900

### Sample preparation

Mixing of the polymer (component c) and the additives (components a and b) was performed in an Arenz KL 1 single-screw extruder at a temperature of 180-210°C at 100 rpm.

Polyethylene films: Examples Ex. 1 - Ex. 6 and Comparative Examples CE1 - CE6 The production of blown films of 50-200 µm in thickness was performed on a Collin BL 180/400 blown film line at 160-200°C.

Determination of the low flammability of the sheets and films was performed according to DIN 4102 B2 with test specimens having dimensions of 190*90 mm which are vertically clamped and subjected to flame exposure at their lower edge with 20 mm-high flames from a gas burner for 15 seconds. The test is passed if over a period of 20 seconds the tip of the flames does not reach a reference mark on the test specimens which is disposed at a distance of 150 mm from the flameexposed lower edge.

The films were ignited in the test length wise and across the film extrusion.

Transparency of the films was determined in neutral-grey light using a LT 12 transparency measure unit from Dr. Lange, Neuss, Germany. Calibration was done without sample at 100%, a grey filter is used.

**Table 1: LDPE films 200 µm with amino ether and DOPO-PEPA**

| Example | CE 1 | CE 2 | CE 3 | Ex. 1 | Ex. 2 | CE 4 | CE 5 |
|---|---|---|---|---|---|---|---|
| LDPE | 98 | 98 | 98 | 98 | 98 | 99 | 99 |
| HALS-NO wax | 2 | | | 1 | | | |
| DOPO-PEPA | | | | 1 | 1 | | |
| Flamestab NOR116 | | | 2 | | 1 | | 1 |
| B2 longitudinal | No | No | Yes | Yes | Yes | No | No |
| B2 crosswise | No | No | No | Yes | Yes | No | No |

Only with the combination of DOPO-PEPA and an amino ether flame retardant DIN 4102 B2 fire test can be passed lengthwise and across the extrusion direction of the films. In addition, the films according to the present invention showed good transparency and no colour shift. No odor was observed during processing of the films.

**Table 2: LDPE films 50, 100 and 200 µm with amino ether and DOPO-PEPA**

| Example | CE 6 | CE 7 | CE 8 | Ex.1 | Ex. 3 | Ex. 4 |
|---|---|---|---|---|---|---|
| LDPE | 100 | 98 | 98 | 98 | 98 | 98 |
| Exolit OP 935 | | 1 | | | | |
| Aflammit PCO 800 | | | 1 | | | |
| HALS-NO wax | | 1 | 1 | 1 | 0.5 | 1.5 |
| DOPO-PEPA | | | | 1 | 1.5 | 0.5 |
| Transmittance 200 µm film [%T] | yes 88 | no 43 | no 39 | yes 60 | yes 55 | yes 65 |
| DIN 4102 B2 longitudinal 50 µm | no | yes | yes | yes | yes | yes |
| DIN 4102 B2 crosswise 50 µm | no | yes | no | yes | yes | yes |
| DIN 4102 B2 longitudinal 100 µm | no | yes | yes | yes | yes | yes |
| DIN 4102 B2 crosswise 100 µm | no | yes | no | yes | yes | yes |
| DIN 4102 B2 longitudinal 200 µm | no | no | yes | yes | no | no |
| DIN 4102 B2 crosswise 200 µm | no | yes | yes | yes | no | yes |

| | | | | | | |
|---|---|---|---|---|---|---|
| CE 7 = comparative example according to WO-A-2015/010775 CE 8 = comparative example according to WO-A-2010/026230 | | | | | | |

Table 2 compares the inventive combination of DOPO-PEPA and amino ether with a combination of phosphinate salt and non-polymeric phosphonate and with an amino ether. Transparent sheets and films are obtained only through the inventive combination of phosphonate polymer with amino ether. Table 3 shows that transparency can be further increased by adding a compatibilizer to the films. Employing HALS-NO wax further prevents discoloration and unpleasant odor during processing.

**Table 3: Transparency of LDPE films 200 µm**

| Example | CE 6 | Ex. 1 | Ex. 5 | Ex. 6 |
|---|---|---|---|---|
| LDPE | 100 | 98 | 97 | 96 |
| DOPO-PEPA | | 1 | 1 | 1 |
| HALS-NO wax | | 1 | 1 | 2 |
| Transmittance 200 µm [%T] | 88 | 60 | 74 | 68 |

The haze number is a measure for clouding of the sheets and films. The inventive combinations of NOR HALS with DOPO-PEPA show markedly lower clouding values compared to the comparative examples. The sheets and films according to the present invention show improved mechanical properties (tensile test). The transparency of the sheets and films is markedly higher than with standard material.

### Polypropylene fibers: Example 7

Fiber grade polypropylene, containing 0.05% by weight of calcium stearate and 0.05% of tris(2,4-di-tert-butylphenyl) phosphite and 0.05% of a N,N-dihydroxylamine made by the direct oxidation of N,N-di(hydrogenated tallow)amine was dry blended with the test additives DOPO-PEPA and Hostavin^{®} NOW and then melt compounded at 234°C (4500P) into pellets. The pelletized fully formulated resin was then spun at 246°C (475°P) into fiber using a Hills laboratory model fiber extruder. The spun tow of 41 filaments was stretched at a ratio of 1:3.2 to give a final denier of 615/41.

Socks are knitted from the stabilized polypropylene fiber on a Lawson-Hemphill Analysis Knitter and tested under NFP A 701 vertical burn procedure. Efficacy as a flame retardant is demonstrated when low After Flame times are observed relative to a blank sample containing no flame retardant.

### Molded polypropylene: Example 8

Molding grade polypropylene was dry blended with test additives DOPO-PEPA and Flamestab^{®} NOR 116 and then melt compounded into pellets. The pelletized fully formulated resin was then compression molded into test specimens using a Wabash Compression Molder.

Test plaques are tested under UL-94 Vertical Burn test conditions. The average time in seconds for the test sample to extinguish after the insult flame is removed was reported. Efficacy as a flame retardant was demonstrated when low Flame times are observed relative to the blank sample containing no flame retardant. All samples containing the instant NOR-hindered amines self-extinguished after application of the first flame. This shows that the instant NOR compounds exhibit discernible efficacy as flame retardants essentially equal to that bestowed by a halogenated or phosphate flame retardant. The blank burned completely after application of the first flame.

### Blown film of EVA: Example 9

Film grade ethylene/vinyl acetate (EVA) copolymers containing 20 weight percent or less of vinyl acetate were dry blended with test additives DOPO-PEPA and Flamestab^{®} NOR 116 and then melt compounded into pellets. The pelletized fully formulated resin was then blown into a film at 205°C using a MPM Superior Blown-film extruder.

The films were tested for flame retardancy under NFP A 701 test conditions. The films containing the compositions of the invention showed flame retardancy. Film grade low density polyethylene (LDPE) which contains some linear low density polyethylene (LLDPE) and/or ethylene/vinyl acetate (EVA) were dry blended with test additives and blown into film as described above for EVA copolymer resin. The films were tested for flame retardancy under NFPA 701 test conditions and those containing the compositions of the invention showed high performance in flame retardancy.

### Polyethylene fibers: Example 10

Fiber grade linear low-density polyethylene (LLDPE), containing 10.4% by weight of DOPO-PEPA and 1.60% of Hostavin^{®} NOW, was dry blended with the test additives and then melt compounded at 240°C into pellets. The pelletized formulated resin was dry blended with 10.0% by weight of Licocene^{®} PE MA 4351 and thus melt-spun at 195°C into fiber using a custom-made pilot melt-spinning line. The spun monofilament was drawn at a ratio of 1:4 to give a final fineness of 173 tex.

## Claims

1. A flame-retardant composition comprising:
a) a compound comprising a N-oxyamine group, and
b) a compound of formulae (II), (III) or (IV) 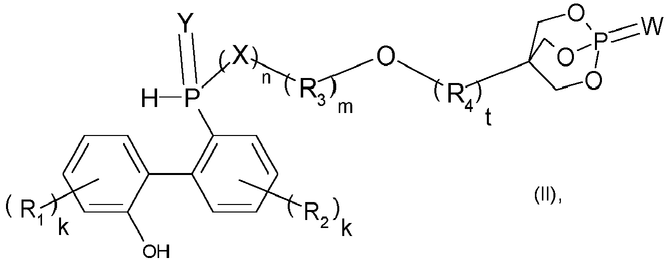 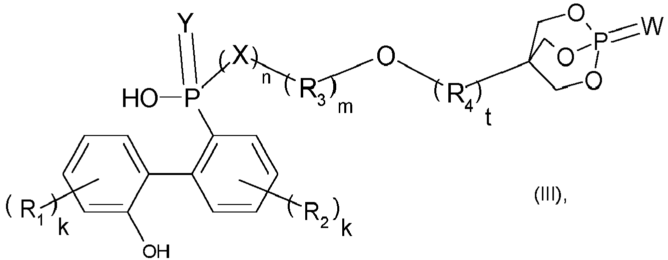 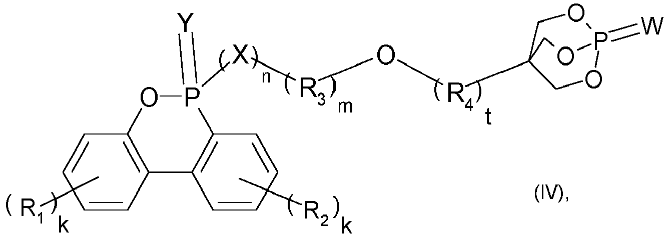 wherein
R₁ and R₂ independently from one another are hydrogen, C₁-C₆-alkyl, -P(O)(OR₅)₂, -P(O)OR₅R₆, -P(O)(R₅)₂, where R₅ and R₆ independently of one another are C₁-C₄-alkyl, C₆-C₁₂-aryl, C₇-C₁₅-aralkyl or C₇-C₁₅-alkaryl, or R₁ and R₂ taken together form an unsaturated cyclic ring, which is optionally substituted by an alkyl group;
k is an integer from 1 to 2,
Y is O or S,
X is C₁-C₄-alkylene, C₆-C₁₂-arylene, C₇-C₁₅-aralkylene or C₇-C₁₅-alkarylene and n is 0, 1 or 2, or
X is -O- or -NR₇-, and n is 1,
R₇ is hydrogen or C₁-C₄-alkyl,
R₃ is C₁-C₄-alkylene, C₆-C₁₂-arylene, C7-C15-aralkylene or C₇-C₁₅-alkarylene,
m is 0, 1 or 2, with the proviso that when X is -O- or -NR₇- m is 1 or 2,
R₄ is C₁-C₄-alkylene,
t is an integer from 1 to 2, and
W is oxygen or sulphur.

2. The composition according to claim 1, wherein component a) is a N-oxyamine-containing compound comprising the structural unit of formula (V) 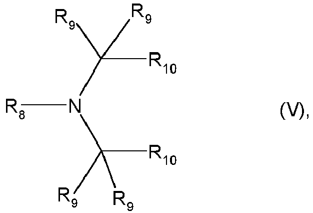 wherein
R₈ is alkoxy, aryloxy, cycloalkoxy, aralkoxy or acyloxy,
R₉ is optionally substituted alkyl, cycloalkyl, aryl, heteroaryl or acyl,
R₁₀ is hydrogen or optionally substituted alkyl, cycloalkyl, aryl, heteroaryl or acyl, or two R₁₀ groups together with the atoms to which they are attached form a ring structure, which is optionally substituted with ester-, ether-, amine-, amide-, carboxy- or urethane-groups.

3. The composition according to claim 2, wherein component a) is selected from 1-cyclohexyloxy-2,2,6,6-tetramethyl-4-octadecylamino-piperidine, bis(1-octyloxy-2,2,6,6-tetramethylpiperidine-4-yl)-sebacate, 2,4-bis[(1-cyclohexyl-oxy-2,2,6,6-tetramethylpiperidine-4-yl)-butyl-amino]-6-(2-hydroxyethyl-amino-S-triazine, bis(1-cyclohexyloxy-2,2,6,6-tetramethyl-piperidine-4-yl)-adipate, 2,4-bis[(1-cyclohexyloxy-2,2,6,6-tetramethylpiperidine-4-yl)-butylamino]-6-chloro-S-triazine, 1-(2-hydroxy-2-methylpropoxy)-4-hydroxy-2,2,6,6-tetramethylpiperidine, 1-(2-hydroxy-2-methylpropoxy)-4-oxo-2,2,6,6-tetramethyl-piperidine, 1-(2-hydroxy-2-methylpropoxy)-4-octadecanoyloxy-2,2,6,6-tetramethyl-piperidine, bis(1-(2-hydroxy-2-methylpropoxy)-2,2,6,6-tetramethylpiperidine-4-yl)-sebacate, bis(1-(2-hydroxy-2-methylpropoxy)-2,2,6,6-tetramethylpiperidine-4-yl)- adipate, 2,4-bis{N-[1-(2-hydroxy-2-methylpropoxy)-2,2,6,6-tetramethylpiperidine-4-yl]-N-butylamino}-6-(2-hydroxy-ethylamino)-S-triazine), 4-piperidinol-2,2,6,6-tetramethyl-1-(undecyloxy)-4,4'-carbonate, the reaction product of 2,4-bis[(1-cyclohexyloxy-2,2,6,6-tetramethyl-piperidine-4-yl)-butylamino]-6-chloro-S-triazine with N,N'-bis-(3-aminopropyl-ethylenediamine); the oligomer which is the condensation product of 4,4'-hexamethylene-bis-(amino-2,2,6,6-tetramethylpiperidine) and 2,4-dichloro-6-[(1-cyclohexyloxy-2,2,6,6-tetramethyl-4-yl)-butylamino]-S-triazine end-chapped with 2-chloro-4,6-bis(dibutylamino)-S-triazine, aliphatic hydroxylamines, such as disterarylhydroxylamine; as well as compounds of the following formulae, in which n is 1-15 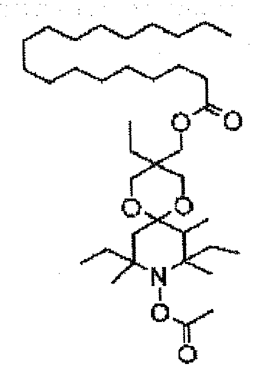 or

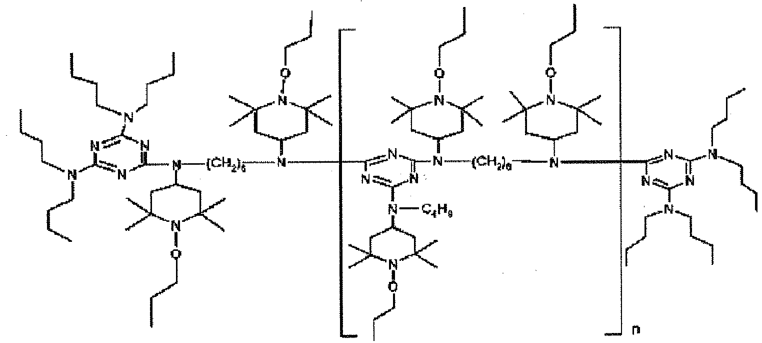

4. The composition according to claim 2, wherein component a) is a reaction product of a fatty acid ester of a 4-hydroxy-2,2,6,6-tetramethylpiperidine, preferably of a 2,2,6,6-tetramethylpiperidin-4-yl-hexadecanoate and/or a 2,2,6,6-tetramethylpiperidin-4-yl-octadecanoate, with an oxidized polyethylene.

5. The composition according to at least one of claims 1 to 4, wherein component b) is a compound of formulae (II), (III) and/or (IV), in which n and m are 0, Y is oxygen or sulphur, R₄ is methylene or ethylene, t is 1 and W is oxygen.

6. The composition according to at least one of claims 1 to 4, wherein component b) is a compound of formulae (II), (III) and/or (IV), in which both R₁ and R₂ independently of one another are hydrogen or C₁-C₆-alkyl.

7. The composition according to at least one of claims 1 to 4, wherein component b) is a compound of formulae (II), (III) and/or (IV), in which X is methylene, n is 1, m is 0, Y is oxygen, R₄ is methylene or ethylene, t is 1, and W is oxygen.

8. The composition according to at least one of claims 1 to 4, wherein compounent b) is a compound of formulae (II), (III) and/or (IV), in which Y is oxygen or sulphur, X is -O- oxygen or -NH-, n is 1, R₃ is methylene or ethylene, m is 2, R₄ is methylene, t is 1 and W is oxygen.

9. The composition according to at least one of claims 1 to 8, wherein component b) is a compound of formula (IV).

10. The composition according to at least one of claims 1 to 9, wherein component b) is a compound of formulae (VI) or (VII)

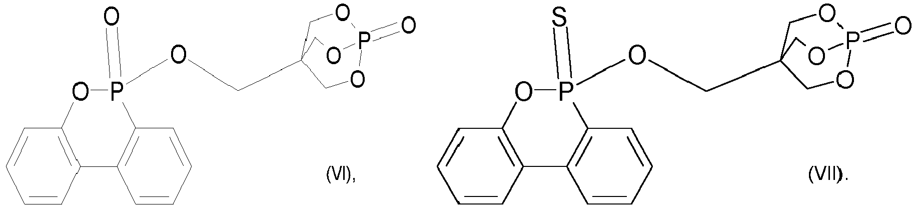

11. The composition according to at least one of claims 1 to 10, wherein component a) is present in 50 - 99.5 % by weight and component b) is present in 0.5 - 50 % by weight in the flame retardant mixture, wherein these percentages refer to the total amount of flame-retardant mixture.

12. A flame-retardant polymer composition comprising components a) and b) according to at least one of claims 1 to 11, and c) a polymer.

13. The flame-retardant polymer composition according to claim 12, wherein the amount of component a) is between 0.2 and 10 % by weight, the amount of component b) is between 0.1 and 20 % by weight, and the amount of component c) is between 70 and 99.7 % by weight, wherein these percentages refer to the total amount of the polymer composition.

14. The flame-retardant polymer composition according to at least one of claims 12 to 13, wherein component c) is a thermoplastic polymer, preferably a thermoplastic polymer selected from the group consisting of polyamides, polycarbonates, polyesters, polyolefins, polystyrenes, polyvinyl chlorides, polyvinyl esters, polyvinyl alcohols, polybutadiene-copolymers, and polyurethanes.

15. The flame-retardant polymer composition according to at least one of claims 12 to 14, wherein component c) is selected from the group of polyolefins, thermoplastic elastomeric polyolefins (TPO), styrenic polymers and copolymers, polybutadiene-copolymers, and polymers which contain hetero atoms double bonds or aromatic rings.

16. The flame-retardant polymer composition according to at least one of claims 12 to 15, wherein component c) is selected from the group of polymers of monoolefins and diolefins, copolymers of monoolefins and diolefins with each other or with other vinyl monomers, polystyrenes, copolymers of styrene or α-methyl styrene with dienes or acrylic derivatives, graft copolymers of styrene or α-methylstyrene, or halogen-containing polymers.

17. The flame-retardant polymer composition according to at least one of claims 12 to 16, wherein this contains d) further additives.

18. The flame-retardant polymer composition according to claim 17, wherein the additive d) is a filler and/or a reinforcing agent.

19. The flame-retardant polymer composition according to claim 17, wherein the additive d) is a functionalized polyethylene wax.

20. The flame-retardant polymer composition according to claim 19, wherein the polymer c) is a polyethylene.

21. A molding containing components a), b) and c) according to at least one of claims 12 to 20.

22. The molding of claim 21, wherein this is a transparent sheeting with 50-500 µm in thickness.

23. The molding of claim 21, wherein this is a film, thread or fiber comprising polyolefins as component c), preferably polyethylene, polypropylene or ethylene-vinyl acetate.

24. The molding of claim 21, wherein this is a blown film.

25. Use of the compositions comprising components a) and b) according to at least one of claims 1 to 11 as a flame retardant.

26. Use of the flame-retardant polymer compositions according to at least one of claims 12 to 20 for the manufacture of polyolefin molded materials, preferably polyolefin films or polyolefin fibres.
